# EUROPEAN PATENT APPLICATION

(11) **EP 2 256 317 A1**
(43) Date of publication of application: **01.12.2010**
(21) Application number: 09161544.3
(22) Date of filing: 29.05.2009
(51) Int. Cl.: F02C 7/16, F02C 7/10, F02C 3/22, F02C 1/00, F02C 1/08, F02C 3/34

(54) **A process for generating power**

(71) Applicant: Shell Internationale Research Maatschappij B.V., 2596 HR Den Haag (NL)
(72) Inventor: Bhat, Ganesh Ramachandra, 560048 Bangalore (IN); Chandrabose, Shinoj Vakkayil, 560048 Bangalore (IN)
(74) Representative: Matthezing, Robert Maarten

(57) **Abstract**

A process for generating power by performing the following steps:
(i) combustion of a combustible gaseous fuel to obtain a combustion gas,
(ii) expanding said combustion gas in an expander wherein mechanical power and an expanded gas is generated and wherein a nitrogen comprising gas having a temperature of between 5 and 50°C and a pressure of between 0.101 and 2 MPa is used to cool the blades of the expander in a closed cooling circuit to obtain a used cooling gas and expanding said used cooling gas in a second expander to generate additional mechanical power.

## Description

The invention is directed to a process for the preparing power wherein a fuel is combusted and expanded in a turbine to generate mechanical power.

An example of such a process is the Integrated Coal Gasification Combined Cycle (IGCC) as for example described in WO-A-2008048391. In this publication a process is described wherein coal is gasified with purified oxygen to generate a mixture of hydrogen and carbon monoxide. The gas mixture is used as fuel in a gas turbine. The pure oxygen is obtained in a cryogenic air separation process, which also prepares a nitrogen rich stream. This nitrogen rich stream is compressed and used as diluent in the combustion.

The present invention is directed to improving the efficiency of processes, which generate mechanical energy by means of combusting a fuel, and expanding the combustion gasses.

The following invention provides such a process. A process for the preparing power by performing the following steps:
(i) combustion of a combustible gaseous fuel to obtain a combustion gas,
(ii) expanding said combustion gas in an expander wherein mechanical power and an expanded gas is generated and wherein a nitrogen comprising gas having a temperature of between 5 and 50°C and a pressure of between 0.101 and 2 MPa is used to cool the blades of the expander in a closed cooling circuit to obtain a used cooling gas and expanding said used cooling gas in a second expander to generate additional mechanical power.

Applicants found that the efficiency of an IGCC process and other processes described below can be significantly increased. Further preferred embodiments and advantages will be described below.

The nitrogen containing gas having a temperature of between 5 and 50°C and a pressure of between 0.101 and 2 MPa is preferably obtained as a by-product in a process to prepare an oxygen product gas by means of an air separation process such as cryogenic distillation or membrane separation. Such air separation processes are well known and for example described in the afore mentioned WO-A-2008048391 and in WO-A-2009007310. Any water present in the nitrogen containing gas is suitably removed prior to expanding to avoid possible freezing out of said water. Removal of water may be performed by passing the gas through an absorption bed, for example comprising alumina or silica.

The expander stage(s) in step (ii) suitably has rows of hollow blades. The nitrogen comprising gas flows through the interior of the blades in one or more stage(s) by means of a closed cooling system to obtain used cooling gas. The used cooling gas is subsequently expanded in an expander to generate mechanical power.

The combustible gaseous fuel may be any gaseous fuel, which has compounds, which can combust with oxygen to carbon dioxide and/or water. Suitably the fuel is a hydrocarbon comprising gas. Suited hydrocarbons are methane, ethane, propane, butane and iso-butane. A suited example of a combustible gaseous fuel is natural gas. In case hydrocarbons are present in the fuel, water will be formed next to carbon dioxide.

The combustible fuel may also suitably be a carbon monoxide and/or hydrogen comprising gas. The combustible fuel may comprise between 20 and 100 vol% carbon monoxide. Such a carbon monoxide comprising fuel gas is obtainable from so-called reforming or gasification processes. Preferably a hydrogen and carbon monoxide comprising fuel is obtained by gasification of a solid or liquid carbonaceous feedstock. Examples of preferred solid carbonaceous feedstocks are coal, petroleum coke and biomass. Examples of suited liquid carbonaceous feedstocks are residual fractions obtained in the refinery process of crude mineral oils. The combustible gaseous fuel preferably comprises less than 20 ppmv sulphur, more preferably less than 5 ppmv sulphur. Sulphur may be removed to such levels by well-known gas treating processes. Preferably the oxygen product as obtained in the air separation process is used in the above referred to gasification process. In another preferred embodiment the hydrogen and carbon monoxide comprising gas as obtained in said gasification is subjected to a water gas shift reaction to obtain a shifted gas comprising hydrogen and carbon dioxide. Suitably, in a next step, carbon dioxide is separated from the shifted gas to obtain a hydrogen rich gas, which is used as the combustible gaseous fuel in step (i). This fuel is preferably combusted with air in a gas turbine. The flue gasses will comprise substantially of water and nitrogen. Carbon dioxide is not formed because the gaseous fuel does not comprise or comprise low levels of carbon monoxide, carbon dioxide and/or hydrocarbons. Examples of such processes are IGCC processes with so-called carbon capture and storage facilities.

In a next preferred embodiment the oxygen product is used in step (i) to combust the combustible gaseous fuel. This so-called oxy-firing mode of operation is advantageous because the carbon dioxide as produced in said combustion is obtained as a highly concentrated gas after expansion. More preferably the fuel in step (i) is combusted with a first mixture of oxygen and carbon dioxide and wherein the following additional steps are performed:
(iii) cooling the expanded gas by indirect heat exchange against a second mixture of oxygen and carbon dioxide to obtain a cooled expanded gas and the first mixture of oxygen and carbon dioxide for use in step (i),
(iv) increasing the pressure of the cooled and expanded gas and cooling the resultant pressurised gas in one or more steps thereby condensing any water present in the gas and separating said condensed water to obtain a pressurised carbon dioxide stream,
(v) mixing part of the pressurised carbon dioxide stream with oxygen to obtain the second mixture of oxygen and carbon dioxide and removing another part of the pressurised carbon dioxide as a product of this process.

Applicants found that the above process provides a high efficiency while expanders can be used which are readily available. Furthermore the process suitably does not operate in the super critical or liquid CO₂ phase. This limits the use of large pressurised cooling equipment and expanders that operate at very high pressures and temperatures.

The fuel to step (i), further referred to as step (ia), in the above oxy-firing mode of operation may be any of the above described fuels. In an alternative embodiment the total content of water, hydrogen or hydrocarbon in the carbon monoxide comprising gas is below 15 vol.%. By isolating the hydrogen from a hydrogen and carbon monoxide mixture it is possible to use this hydrogen in power production, which power production does not require purified oxygen, and use the resulting carbon monoxide comprising gas in the process according to the invention. In this manner the amount of purified oxygen per unit of power is reduced when starting from a mixture of hydrogen and carbon monoxide. In addition, by removing hydrogen, hydrocarbons and/or water from the fuel, the amount of water as present in the combustion gas will be lower, resulting in that no or considerably less water will have to be separated in step (iv).

The oxygen used in step (ia) of the oxy-firing mode of operation preferably has a purity of between 50 and 100 vol.%, not counting water and carbon dioxide. The oxygen purity will influence the composition of the carbon dioxide as obtained in step (v). If this carbon dioxide is to be stored, in for example a sub-surface reservoir, its purity is preferably above 90 vol. %. The purity of the oxygen used will then preferably be above 88 vol%. Oxygen is suitably isolated from air in an air separation process, such as by cryogenic distillation or by membrane separation.

The temperature of the first mixture of oxygen and carbon dioxide as obtained in step (iii) and used in step (ia) is preferably greater than 300°C and more preferably greater than 550°C. Applicants found that by pre-heating a mixture of oxygen and carbon dioxide in step (iii) to as high as possible temperature, results in a lower fuel consumption.

The temperature of the gaseous fuel is preferably greater than 30°C and more preferably greater than 100°C.

The pressure of the combustion gas in step (ia) is between 1 and 7 MPa and more preferably between 3 and 5 Mpa. The temperature of the combustion gas is preferably between 1000 and 1550°C, and more preferably between 1250 and 1450°C. The molar ratio of carbon dioxide and oxygen in step (ia) is between 4:1 and 10:1, and more preferably between 6.75:1 and 10:1. This along with oxygen purity above 88 vol% will ensure that the purity of the carbon dioxide product obtained in step (v) is above 90 vol%.

The expander in step (ii) of the oxy-firing mode, further referred to as step (iia), may for example be an adapted gas turbine. An example of a suitable expander is based on the Siemens SGT5-4000F gas turbine. This gas turbine can be made suited for this application by removing the turbine compression section and other adaptations as described in detail in Griffiths, J., IGSC: using rocket science for increased power, 100% CO2 capture, and no NOx or SOx, Modern Power Systems, February 2009, pages 12-18. The pressure is preferably let down in the expander to a pressure level of between 0.2 and 0.105 MPa. Preferably the pressure is let down making use of 2 to 4 expanders in series. Optionally the second and further expanders also have a combustion chamber such that step (ia) and (iia) are performed stepwise. In this embodiment the expanded gas of a first expander contains residual oxygen to combust a next part of the gaseous fuel and so forth. Extra care should be taken to make sure that for each step there is enough oxygen present in the residual mixture for subsequent combustions. Suitably there is some residual oxygen present in the final expanded gas for safety reason.

The heat exchanger in step (iii) may be any heat exchanger suited for gas to gas heat exchange. Preferably the heat exchanger is a so-called welded plate heat exchanger (WPHE) or a printed circuit heat exchanger (PCHE), sometimes also referred to as a diffusion-bonded heat exchanger. These heat exchangers are preferred because they combine a low pressure drop with a high mechanical integrity which allows for high pressure differences between the two zones of the heat exchanger. Examples of the above preferred heat exchangers are the Compabloc, as obtainable from Alfa Laval Corporate AB, Rudeboksvägen 1, SE-226 55 Lund, Sweden and the Printed circuit heat exchangers as obtainable from Heatric USA, Houston, USA.

In step (iv) cooling may be performed by any indirect heat exchange process, such as air cooling or cooling against cooling water. Preferably part of the cooling in step (iv) is performed by indirect heat exchange against another part of the nitrogen comprising gas and wherein the used nitrogen containing gas is expanded, preferably in the same second expander, to generate additional mechanical power. In another embodiment part of the cooling in step (iv) is performed by indirect heat exchange against a nitrogen comprising gas and wherein the used nitrogen containing gas is further used as the nitrogen containing gas in step (ii). This nitrogen containing gas used in step (iv) is preferably the same nitrogen containing gas as obtained as a by-product in a process to prepare an oxygen product gas by means of an air separation process as described above.

If the expander also has a direct cooling system wherein the used cooling medium mixes with the expanded gases it is preferred to use the pressurised carbon dioxide stream as obtained in step (iv). This pressurised carbon dioxide stream may optionally be further pressurised to a pressure suited to add the coolant to the expander.

Part of one of the above described embodiments of the invention will be illustrated making use of the following Figure.

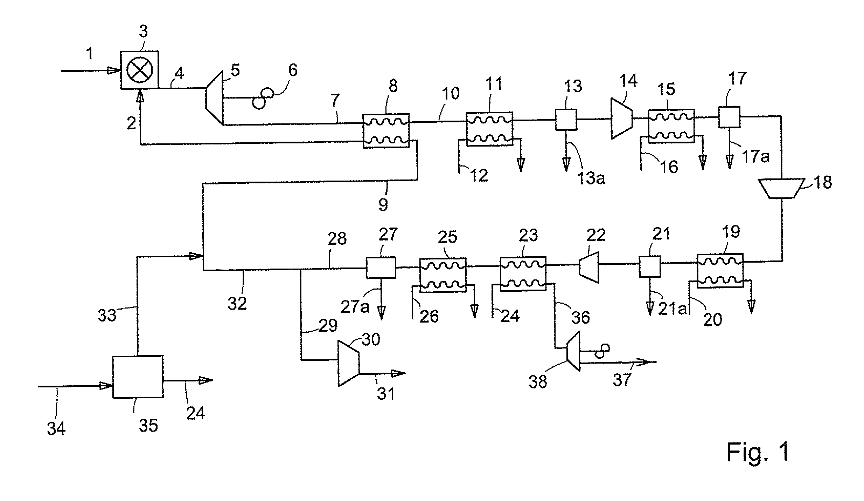

Figure 1 shows a line-up wherein a combustible gaseous fuel (1) is combusted in a combustor (3) with a first mixture of oxygen and carbon dioxide (2). In said combustor (3) a combustion gas (4) is obtained. This combustion gas (4) is expanded in an expander (5) wherein mechanical power (6) and an expanded gas (7) is generated. The expanded gas (7) is cooled by indirect heat exchange in heat exchanger (8) against a second mixture of oxygen and carbon dioxide (9) to obtain a cooled expanded gas (10) and the first mixture of oxygen and carbon dioxide (2).

Between heat exchanger (8) and the compression and cooling sequences of step (iv) the cooled expanded gas (10) is first cooled against cooling water (12) in heat exchanger (11), in which step water condenses. The condensed water (13a) is separated from the gas in knock-out vessel (13).

The pressure of the cooled and expanded gas (10) is increased by means of compressors (14,18,22). The resultant pressurised gas streams are subsequently cooled in heat exchangers (15,19,23,25). In said cooling steps water may condense which is separated in knock-out vessels (17,21,27) as water (17a,21a,27a). Cooling is performed against cooling water (16,20,26). In heat exchanger (23) cooling is effected against a nitrogen comprising gas (24) as obtained in a separation process (35) of air (34). In the separation process (35) of air (34) oxygen (33) having the desired purity is obtained. The heated nitrogen comprising gas (24) is then expanded in an expander (38) wherein mechanical power and expanded nitrogen gas (37) are generated.

After the above cooling and pressurising a pressurised carbon dioxide stream (28) is obtained. Part (29) of this pressurised carbon dioxide stream is further pressurised to a pressure of for example 8 MPa in compressor (30) to obtain a carbon dioxide product (31). The carbon dioxide product may for example be used for enhanced oil recovery or stored in sub-surface reservoirs. Another part (32) of the pressurised carbon dioxide stream is mixed with oxygen (33) to obtain the second mixture (9) of oxygen and carbon dioxide. Suitably hydrogen or a hydrogen comprising gas is added to the pressurised CO2 product stream or to the CO2 product stream to convert any residual oxygen which may be present in said stream. Said conversion may be enhanced in the presence of a catalyst.

### Example 1

The efficiency of a process as illustrated in Figure 1 has been calculated making use of a software program called Thermoflex Version 18.0 revision 2 as obtained from Thermoflow, Inc., 29 Hudson Road · Sudbury, MA 01776, USA. The fuel is natural gas. The purity of the oxygen stream (33) is 99.7 vol.%. The main conditions for the various flows are given in Table 1. The electric efficiency of the process based on LHV of the fuel, excluding and including the efficiency of the cryogenic air separation unit (35) is calculated and presented in Table 4.

**Table 1**

| | | | | | | | |
|---|---|---|---|---|---|---|---|
| Stream number | 1 | 2 | 4 | 7 | 10 | 28 | 31 |
| Pressure (MPa) | 5.6 | 4.1 | 4.0 | 0.116 | 0.1068 | 4.021 | 8.0 |
| Temperature (°C) | 230 | 720 | 1373 | 727 | 77.5 | 15 | 67.5 |
| Flow (ton/hour) | 6 | 300 | 306 | 306 | 306 | 294 | 16.5 |

### Example 2

The efficiency of a process as illustrated in Figure 1 has been calculated as in Example 1.

The fuel is a mixture of carbon monoxide and hydrogen (2.68:1 mol:mol). The purity of the oxygen stream (33) is the same as in Example 1.

The main conditions for the various flows are given in Table 2. The electric efficiency of the process based on LHV of the fuel, excluding and including the efficiency of the cryogenic air separation unit (35) is calculated and presented in Table 4. Conditions for the various flows are given in Table 2.

**Table 2**

| | | | | | | | |
|---|---|---|---|---|---|---|---|
| Stream number | 1 | 2 | 4 | 7 | 10 | 28 | 31 |
| Pressure (MPa) | 5.6 | 4.1 | 4.0 | 0.116 | 0.1068 | 4.021 | 8.0 |
| Temperature (°C) | 148.5 | 720 | 1366 | 727 | 77.5 | 15 | 71 |
| Flow (ton/hour) | 27 | 277 | 304 | 304 | 304 | 299 | 39 |

### Example 3

The efficiency of a process as illustrated in Figure 1 (or 2) has been calculated as in Example 1.

The fuel is a carbon monoxide comprising fuel containing 90 vol. % CO, 8 vol.% hydrogen, 1.5 vol.% water and 0.5 vol.% nitrogen The purity of the oxygen stream (33) is the same as in Example 1.

The main conditions for the various flows are given in Table 3. The electric efficiency of the process based on LHV of the fuel, excluding and including the efficiency of the cryogenic air separation unit (35) is calculated and presented in Table 4.

**Table 3**

| | | | | | | | |
|---|---|---|---|---|---|---|---|
| Stream number | 1 | 2 | 4 | 7 | 10 | 28 | 31 |
| Pressure (MPa) | 5.6 | 4.1 | 4.0 | 0.116 | 0.1068 | 4.021 | 8.0 |
| Temperature (°C) | 150 | 720 | 1359 | 726 | 63.8 | 15 | 70.8 |
| Flow (ton/hour) | 27 | 294 | 321 | 321 | 321 | 319 | 42.1 |

Examples 1-3 have been repeated wherein a nitrogen stream as obtained in the cryogenic air separation process is split into 2 parts. One part is used to cool the blades of the expander (5) and the other part used in heat exchanger (23). The resultant used nitrogen streams are combined and expanded to generate mechanical power and thus increase the efficiency of the overall process. The efficiencies have been calculated and the results are presented in Table 4 as case 1.

Examples 1-3 have been repeated wherein a nitrogen stream as obtained in the cryogenic air separation process is first used as cooling medium in heat exchanger (23) and subsequently used to cool the blades of the expander (5). The resultant used nitrogen stream is expanded to generate mechanical power and thus increase the efficiency of the overall process. The efficiencies have been calculated and the results are presented in Table 4 as case 2.

Examples 1-3 have been repeated wherein a nitrogen stream as obtained in the cryogenic air separation process is used to cool the blades of the expander (5). The efficiencies have been calculated and the results are presented in Table 4 as case 3.

**Table 4:**

| Fuel Type | | With ASU Efficiency(*) (%) | Without ASU Efficiency (%) | Nitrogen temperature at N2 expander inlet (°C) |
|---|---|---|---|---|
| Natural Gas | Case 1 | 53.33 | 62.77 | 161 |
| | Case 2 | 53.84 | 63.29 | 219 |
| | Case 3 | 52.81 | 62.25 | 90.7 |
| | Example 1 | 49.56 | 59.02 | - |
| Syn Gas with H2, H2O and HC ∼ 25 vol% And CO ∼ 65 vol% | Case 1 | 51.22 | 58.33 | 180 |
| | Case 2 | 51.45 | 58.57 | 253 |
| | Case 3 | 50.55 | 57.66 | 123 |
| | Example 2 | 48.03 | 55.14 | - |
| Syn Gas with H2, H2O and HC ∼ 9.5 vol% And CO ∼ 90 vol% | Case 1 | 50.71 | 57.64 | 183 |
| | Case 2 | 51.12 | 58.04 | 249 |
| | Case 3 | 50.35 | 57.27 | 126 |
| | Example 3 | 47.77 | 54.69 | - |

| | | | | |
|---|---|---|---|---|
| (*)Efficiency is based on the LHV of the fuel and does not include the gasifier efficiency. | | | | |

## Claims

1. A process for the preparing power by performing the following steps:
(i) combustion of a combustible gaseous fuel to obtain a combustion gas,
(ii) expanding said combustion gas in an expander wherein mechanical power and an expanded gas is generated and wherein a nitrogen comprising gas having a temperature of between 5 and 50°C and a pressure of between 0.101 and 2 MPa is used to cool the blades of the expander in a closed cooling circuit to obtain a used cooling gas and expanding said used cooling gas in a second expander to generate additional mechanical power.

2. Process according to claim 1, wherein the nitrogen containing gas is obtained as a by-product in a process to prepare an oxygen product gas by means of an air separation process.

3. Process according to claim 2, wherein the oxygen product is used in step (i) to combust the combustible gaseous fuel.

4. Process according to any one of claims 1-3, wherein the gaseous fuel is a hydrocarbon comprising gas.

5. Process according to any one of claims 1-3, wherein the gaseous fuel is a carbon monoxide and/or hydrogen comprising gas.

6. Process according to claim 5, wherein the oxygen product is used to prepare a carbon monoxide comprising gas by means of a partial oxidation reaction with a carbonaceous feedstock and wherein the carbon monoxide comprising gas is used as the combustible gaseous fuel in step (i).

7. Process according to claim 5, wherein the oxygen product is used to prepare a hydrogen and carbon monoxide comprising gas by means of a partial oxidation reaction with a carbonaceous feedstock, wherein this gas is subjected to a water gas shift reaction to obtain a shifted gas comprising hydrogen and carbon dioxide, wherein carbon dioxide is separated from the shifted gas to obtain a hydrogen rich gas using the hydrogen rich gas as the combustible gaseous fuel in step (i), whereby the fuel is combusted with air in a gas turbine.

8. Process according to any one of claims 3-6, wherein in step (i) the fuel is combusted with a first mixture of oxygen and carbon dioxide and wherein the following additional steps are performed:
(iii) cooling the expanded gas by indirect heat exchange against a second mixture of oxygen and carbon dioxide to obtain a cooled expanded gas and the first mixture of oxygen and carbon dioxide for use in step (i),
(iv) increasing the pressure of the cooled and expanded gas and cooling the resultant pressurised gas in one or more steps thereby condensing any water present in the gas and separating said condensed water to obtain a pressurised carbon dioxide stream,
(v) mixing part of the pressurised carbon dioxide stream with oxygen to obtain the second mixture of oxygen and carbon dioxide and removing another part of the pressurised carbon dioxide as a product of this process.

9. Process according to claim 8, wherein the pressure of the combustion gas is between 1 and 7 MPa.

10. Process according to any one of claims 8-9, wherein the molar ratio of carbon dioxide and oxygen in the first mixture in step (i) is between 4:1 and 10:1.

11. Process according to any one of claims 8-10, wherein the temperature of the first mixture of oxygen and carbon dioxide as obtained in step (iii) is greater than 300°C.

12. Process according to any one of claims 8-11, wherein the heat exchanger in step (iii) is a welded plate heat exchanger (WPHE) or a printed circuit heat exchanger (PCHE).

13. Process according to any one of claims 8-12, wherein part of the cooling in step (iv) is performed by indirect heat exchange against another part of the nitrogen comprising gas and wherein the used nitrogen containing gas is expanded in the second expander to generate additional mechanical power.

14. Process according to any one of claims 8-12, wherein part of the cooling in step (iv) is performed by indirect heat exchange against a nitrogen comprising gas and wherein the used nitrogen containing gas is further used as the nitrogen containing gas in step (ii).

15. Process according to any one of claims 8-14, wherein part of the pressurised carbon dioxide obtained in step (iv) is used for direct cooling of the expander used in step (ii).
